# EUROPEAN PATENT SPECIFICATION

(11) **EP 2 573 978 B1**
(45) Date of publication and mention of the grant of the patent: **09.03.2016**
(21) Application number: 11846503.8
(22) Date of filing: 09.12.2011
(51) Int. Cl.: H04L 12/24, H04L 12/66, H04L 12/64

(54) **METHOD, APPARATUS AND SYSTEM FOR DEVICE MANAGEMENT**
GERÄTEVERWALTUNGSVERFAHREN, -VORRICHTUNG UND -SYSTEM
PROCÉDÉ, APPAREIL ET SYSTÈME DE GESTION DE DISPOSITIFS

(30) Priority: 10.12.2010 CN 201010601410
(43) Date of publication of application: 27.03.2013
(73) Proprietor: Huawei Device Co., Ltd., Shenzhen, Guangdong 518129 (CN)
(72) Inventor: SONG, Yue, Shenzhen Guangdong 518129 (CN); WANG, Rui, Shenzhen Guangdong 518129 (CN); CHANG, Xinmiao, Shenzhen Guangdong 518129 (CN); LIU, Haitao, Shenzhen Guangdong 518129 (CN)
(74) Representative: Schmitz, Alexander
(86) International application number: PCT/CN2011/083778
(87) International publication number: WO 2012/075965

(56) References cited:
- EP-A1- 1 705 872
- EP-A1- 2 104 274
- WO-A1-2010/081224
- CN-A- 101 325 509
- CN-A- 101 754 188
- CN-A- 101 771 556
- CN-A- 101 802 811
- "Gateway Management Object Technical Specification ; OMA-TS-GwMO-V1_0-20101123-D", OMA-TS-GWMO-V1_0-20101123-D, OPEN MOBILE ALLIANCE (OMA), 4330 LA JOLLA VILLAGE DR., SUITE 110 SAN DIEGO, CA 92122 ; USA , no. 1.0 23 November 2010 (2010-11-23), pages 1-32, XP064070459, Retrieved from the Internet: URL:ftp/Public_documents/DM/DM-GWMO/Perman ent_documents/ [retrieved on 2010-11-23]
- SEUNGKYU PARK ET AL: "Image Distribution using Image Inventory MO ; OMA-DM-GwMO-2011-0004R02-CR_Image_Inventor y_MO_Usage", OMA-DM-GWMO-2011-0004R02-CR_IMAGE_INVENTOR Y_MO_USAGE, OPEN MOBILE ALLIANCE (OMA), 4330 LA JOLLA VILLAGE DR., SUITE 110 SAN DIEGO, CA 92122 ; USA , 31 January 2011 (2011-01-31), pages 1-6, XP064070266, Retrieved from the Internet: URL:ftp/Public_documents/DM/DM-GWMO/2011/ [retrieved on 2011-02-11]

## Description

### FIELD OF THE INVENTION

The present invention relates to the field of communications technologies, and in particular, to a method, a device, and a system for device management.

### BACKGROUND OF THE INVENTION

The Open Mobile Alliance (Open Mobile Alliance, OMA) device management (Device Management, DM) V1.2, briefly referred to as a DM specification in the following, is a unified specification of DM. A DM system provides a low-cost solution which is used for a third party to manage and set environment and configuration information in terminal equipments (for example, a mobile phone terminal and a functional object in the terminal), so as to solve problems emerging in a process of use of the devices. For example, operations such as installation and upgrade of software and firmware are performed in an over the air (over the air, OTA) manner, so as to provide more humanized and personalized services and improve user experience. The third party may be a carrier, a service provider or an information management department of a partner.

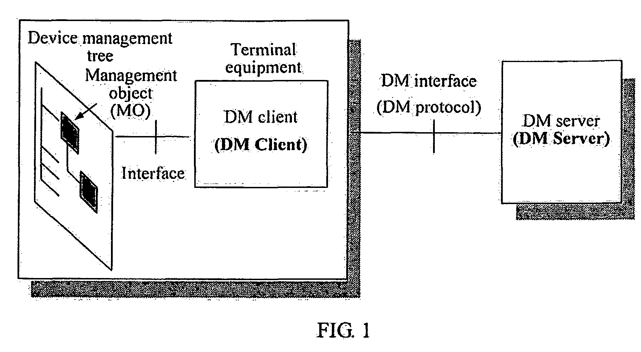

Referring to a structural frame diagram of DM shown in FIG. 1, a DM client on a terminal equipment is configured to explain and execute a management command delivered by a DM server. A device management tree stored on the terminal equipment may be considered as an interface through which the DM server manages the terminal equipment, and the DM server communicates with the DM client in the terminal equipment through a DM protocol to implement management of the terminal equipment. The device management tree includes some management objects (Management Object, MO), and the DM server achieves a purpose of managing the terminal equipment by performing operations, such as Get (Get), Replace (Replace), Execute (Exec), Copy (Copy), and Delete (Delete), on the MOs.

The SCOMO is mainly used to standardize processes, such as download, installation, update, and activation, of software components. A server configures a network side software package uniform resource locator (Pkg Uniform Resource Locator, URL) on the device management tree, and sends a command to instruct a terminal to download software, that is, executes a Download (Download) node in the MO by using an Exec command. After the download is completed, the terminal is instructed to install the software components.

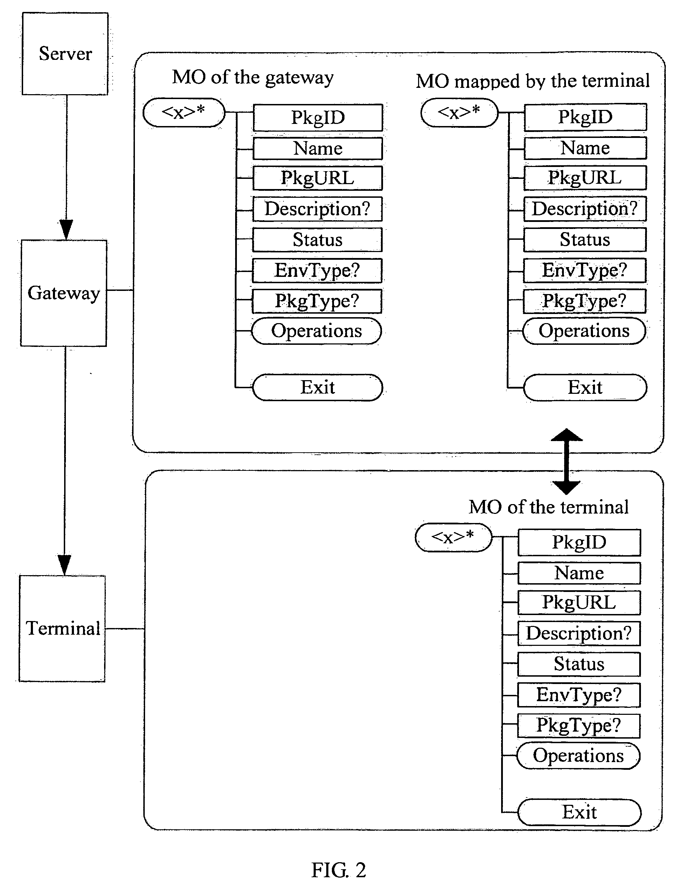

In an existing device management method, an MO or a data model of a terminal equipment is mapped to be an MO on a gateway. Referring to FIG. 2, when the server executes a certain operation on the MO on the gateway, the gateway sends a relevant operation to the terminal, so that it is implemented that the server manages the terminal through the MO which is mapped by the terminal and is on the gateway, and the server manages the gateway through an MO on the gateway itself. However, in the prior art, after the server executes an operation on the MO which is mapped by the terminal and is on the gateway, the gateway sends the relevant operation to the terminal. For example, if the server expects the gateway to replace the terminal equipment to download software, the server may configure PkgURL in the SCOMO which is mapped by the terminal and is in the gateway. However, the gateway sends the configuration to the terminal to make the terminal download the software at a wide area network (Wide Area Network, WAN) side, thereby being unable to implement that multiple terminals download the software from the gateway. Therefore, in the prior art, the terminal directly performs information interaction with the wide area network side, and the gateway cannot replace the terminal to perform information interaction with the wide area network, which increases the burden of a wide area network server and wastes a resource of the wide area network.

"Gateway Management Object Technical Specification; OMA-TS-GwMO-V1_0-20101123-D", describes Management Objects and Generic Alerts that are needed to provide the Device Management Gateway functionality.

EP 2104274 A1 describes a method for installing software components.

### SUMMARY OF THE INVENTION

Embodiments of the present invention provide a method, a device, and a system for device management, so as to solve a problem that in the prior art, a terminal directly performs information interaction with a wide area network side, the burden of a wide area network server is increased, and a resource of a wide area network is wasted.

In one aspect, an embodiment of the present invention provides a device management method, including:
Configuring a relevant identifier at a wide area network WAN side for a management object which is for a gateway and is in a management tree of the gateway, and configuring a relevant identifier at a local area network LAN side for a management object which is mapped by at least one terminal and is in the management tree of the gateway, where the relevant identifier at the WAN side includes a uniform resource locator at the WAN side, a server identifier at the WAN side, or a server address at the WAN side, and the relevant identifier at the LAN side includes a uniform resource locator at the LAN side, an access identifier of the gateway at the LAN side, or an access address of the gateway at the LAN side; and
triggering the at least one terminal to perform information interaction with the gateway according to the relevant identifier at the LAN side, and triggering the gateway to perform information interaction with a corresponding server at the WAN side according to the relevant identifier at the WAN side;
when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway,
the triggering (102) the at least one terminal to perform information interaction with the gateway according to the relevant identifier at the LAN side, and triggering the gateway to perform information interaction with the corresponding server at the WAN side according to the relevant identifier at the WAN side comprises:
   triggering the gateway to perform a download operation on the corresponding server at the WAN side according to the uniform resource locator at the WAN side; and
   triggering the at least one terminal to perform a download operation on the gateway according to the uniform resource locator at the LAN side.

The present invention further provides a device management server, including:
a configuring module, configured to configure a relevant identifier at a wide area network WAN side for a management object which is for a gateway and is in a management tree of the gateway, and configure a relevant identifier at a local area network LAN side for a management object which is mapped by at least one terminal and is in the management tree of the gateway, where the relevant identifier at the WAN side includes a uniform resource locator at the WAN side, a server identifier at the WAN side, or a server address at the WAN side, and the relevant identifier at the LAN side includes a uniform resource locator at the LAN side, an access identifier of the gateway at the LAN side, or an access address of the gateway at the LAN side; and
a triggering module, configured to trigger the at least one terminal to perform information interaction with the gateway according to the relevant identifier which is at the LAN side and is configured by the configuring module, and trigger the gateway to perform information interaction with a corresponding server at the WAN side according to the relevant identifier which is at the WAN side and is configured by the configuring module;
wherein the triggering module comprises:
   a first triggering unit, configured to, when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway, trigger the gateway to perform a download operation on the corresponding server at the WAN side according to the uniform resource locator at the WAN side, and trigger the at least one terminal to perform a download operation on the gateway according to the uniform resource locator at the LAN side.

In another aspect, an embodiment of the present invention provides a device management system, including a device management server, a gateway, and at least one terminal, where
the device management server is configured to configure a relevant identifier at a wide area network WAN side for a management object which is for the gateway and is in a management tree of the gateway, and configure a relevant identifier at a local area network LAN side for a management object which is mapped by the at least one terminal and is in the management tree of the gateway, where the relevant identifier at the WAN side includes a uniform resource locator at the WAN side, a server identifier at the WAN side, or a server address at the WAN side, and the relevant identifier at the LAN side includes a uniform resource locator at the LAN side, an access identifier of the gateway at the LAN side, or an access address of the gateway at the LAN side; and trigger the at least one terminal to perform information interaction with the gateway according to the relevant identifier at the LAN side, and trigger the gateway to perform information interaction with a corresponding server at the WAN side according to the relevant identifier at the WAN side; when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway,
the trigger the at least one terminal to perform information interaction with the gateway according to the relevant identifier at the LAN side, and trigger the gateway to perform information interaction with the corresponding server at the WAN side according to the relevant identifier at the WAN side comprises:
trigger the gateway to perform a download operation on the corresponding server at the WAN side according to the uniform resource locator at the WAN side; and
trigger the at least one terminal to perform a download operation on the gateway according to the uniform resource locator at the LAN side;
the at least one terminal is configured to perform information interaction with the gateway according to the relevant identifier at the LAN side; and
the gateway is configured to perform information interaction with the corresponding server at the WAN side according to the relevant identifier at the WAN side.

In a method, a device, and a system for device management provided in the embodiments of the present invention, a relevant identifier at a WAN side is configured for an MO which is for a gateway and is in a management tree of the gateway, so that the gateway directly performs information interaction with a server at the WAN side, and a relevant identifier which is at a local area network (Local Area Network, LAN) side and points to a certain location in the gateway is configured in an MO which is mapped by a terminal and is in the gateway, so that the terminal can perform information interaction with a gateway side, and does not need to perform information interaction with the WAN side, thereby alleviating the burden of a server at the WAN side and saving a resource of a wide area network.

### BRIEF DESCRIPTION OF THE DRAWINGS

FIG. 1 is a structural frame diagram of device management;
FIG 2 is a schematic structural diagram of mapping of a terminal equipment to a gateway in the prior art;
FIG. 3 is a flow chart of a first embodiment of a device management method according to the present invention;
FIG. 4 is a schematic diagram of a second embodiment of a device management method according to the present invention;
FIG. 5 is a schematic diagram of a third embodiment of a device management method according to the present invention;
FIG. 6 is a schematic diagram of a fourth embodiment of a device management method according to the present invention;
FIG. 7 is a schematic structural diagram of a first embodiment of a device management server according to the present invention;
FIG. 8 is a schematic structural diagram of a second embodiment of a device management server according to the present invention; and
FIG. 9 is a schematic structural diagram of a first embodiment of a device management system according to the present invention.

### DETAILED DESCRIPTION OF THE EMBODIMENTS

The technical solutions of the present invention are further described in detail in the following with reference to the accompanying drawings and embodiments.

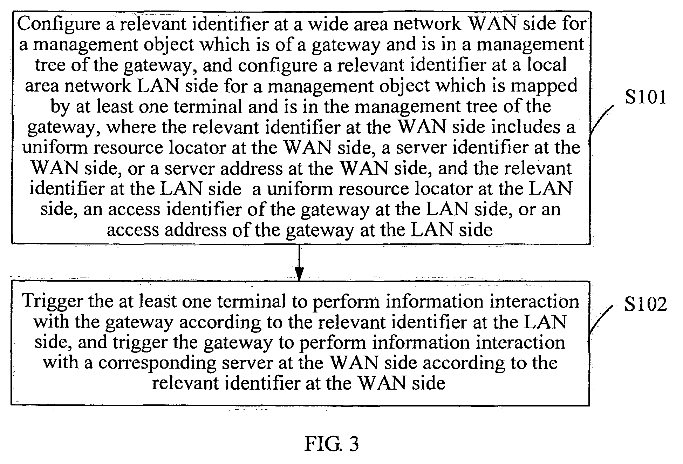

FIG. 3 is a flow chart of a first embodiment of a device management method according to the present invention. As shown in FIG. 3, the method includes:
S101: Configure a relevant identifier at a wide area network WAN side for a management object which is of a gateway and is in a management tree of the gateway, and configure a relevant identifier at a local area network LAN side for a management object which is mapped by at least one terminal and is in the management tree of the gateway, where the relevant identifier at the WAN side includes a uniform resource locator at the WAN side, a server identifier at the WAN side or a server address at the WAN side, and the relevant identifier at the LAN side includes a uniform resource locator at the LAN side, an access identifier of the gateway at the LAN side or an access address of the gateway at the LAN side.
S102: Trigger the at least one terminal to perform information interaction with the gateway according to the relevant identifier at the LAN side, and trigger the gateway to perform information interaction with a corresponding server at the WAN side according to the relevant identifier at the WAN side.

It should be noted that, an execution subject of the forgoing steps is a device management server, that is, the DM Server.

In one aspect, the device management server may configure the relevant identifier at the WAN side for the management object which is of the gateway and is in the management tree of the gateway. Specifically, the device management server may create an MO in the management tree of the gateway, and configure a relevant identifier at the wide area network WAN side for the MO; or the device management server may also configure an existing MO in the management tree of the gateway. The relevant identifier at the WAN side may be a URL at the WAN side, or the server identifier at the WAN side or the server address at the WAN side. Since the MO is a management object which is of the gateway and is in the management tree of the gateway, when the device management server triggers the gateway to execute a certain operation, that is, the device management server performs a certain operation, for example, an operation such as download or session initiation, on a node in the MO, the gateway can perform a corresponding interaction operation with the corresponding server at the WAN side according to the relevant identifier which is at the WAN side and is configured by the server.

In another aspect, for an MO which is mapped by at least one terminal and exists in the gateway, generally, multiple MOs may exist. The device management server may configure the relevant identifier at the local area network LAN side for the MO mapped by the terminal, so as to instruct the at least one terminal to perform information interaction with the gateway at a location corresponding to the relevant identifier at the LAN side. The relevant identifier at the LAN side may be a URL of the gateway at the LAN side, an access identifier of the gateway at the LAN side or an access address of the gateway at the LAN side, where the access identifier of the gateway at the LAN side includes a local access path of the gateway. Since the relevant identifier at the LAN side points to a set location in the gateway, when the device management server triggers the terminal to execute a certain operation, that is, the device management server performs a certain operation on a node in the MO which is mapped by the terminal and is in the gateway, because the node exists in the MO which is mapped by the terminal and is in the gateway, the gateway may forward the configuration for the node and the operation to a corresponding terminal, and the terminal performs information interaction with the gateway in the set location which is in the gateway and is pointed to by the relevant identifier at the LAN side.

In the device management method provided in this embodiment, a relevant identifier at a WAN side is configured for an MO which is of a gateway and is in a management tree of the gateway, so that the gateway directly performs information interaction with a server at the WAN side, and a relevant identifier which is at an LAN side and points to a certain location in the gateway is configured for an MO which is mapped by a terminal and is in the gateway, so that the terminal can perform information interaction with a gateway side and does not need to perform information interaction with the WAN side, thereby alleviating the burden of the server at the WAN side and saving a resource of a wide area network.

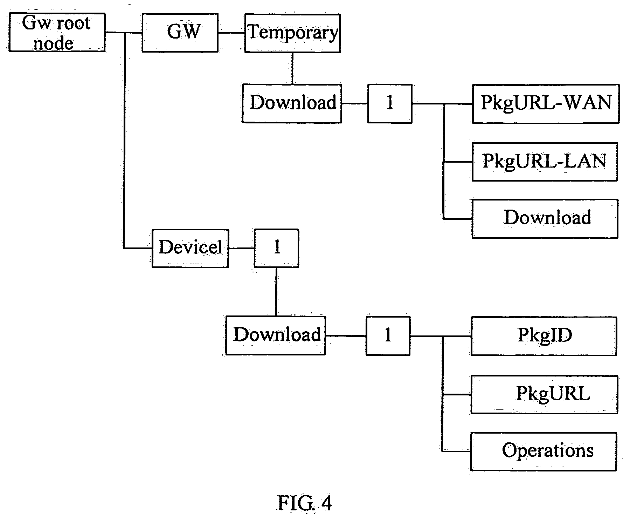

The device management method provided in the embodiment of the present invention may be applied in multiple application scenes. FIG. 4 is a schematic diagram of a second embodiment of the device management method according to the present invention. In this embodiment, a case that a device management server, that is, the DM Server, triggers a gateway to replace a terminal to perform a download operation is taken as an example for description, and reference is made to FIG. 4.

In one aspect, the device management server may create an MO in a management tree of the gateway, where the MO is a management object of the gateway, and the device management server configures a relevant identifier at a WAN side for the created MO. In an application scene provided in this embodiment, the relevant identifier at the WAN side may be a PkgURL of a software package at the WAN side (PkgURL-WAN under ./GW/Temporary/Download/1 in FIG. 4). The device management server further configures a relevant identifier at an LAN side for the created MO. In this application scene, the relevant identifier at the LAN side is a PkgURL at the LAN side (PkgURL-LAN under ./GW/Temporary/Download/1 in FIG. 4), and the Pkg URL at the LAN side points to an access path of downloaded data stored in the gateway. In addition, the device management server further adds a Download node (Download node under ./GW/Temporary/Download/1 in FIG. 4) in the created MO, so as to execute the download operation.

After the foregoing configuration process is completed, the device management server triggers the gateway to execute a download operation, that is, execute a download operation on the foregoing Download node. Since the node is a management object which is of the gateway and is in the management tree, the gateway can execute a download action. The gateway performs the download operation on a corresponding server at the WAN side according to the foregoing configured PkgURL-WAN, that is, performs information interaction with the corresponding server at the WAN side. After the completion of the download, the gateway stores the downloaded data in a location designated by the PkgURL at the LAN side, that is, a location designated by a value of the node PkgURL-LAN. The value of the PkgURL-LAN may be a local URL which is of the gateway and is configured by the device management server. For example, the value may be a local Internet Protocol (Internet Protocol, IP) address, port, and designated directory or address of the gateway.

In another aspect, the device management server may further configure a node in an MO which is mapped by at least one terminal and is in the gateway, for example, configure a PkgURL at the LAN side for an SCOMO which is mapped by a terminal Device1 and is in the gateway, where a node value of a ./Device1/1/Download/1/PkgURL node is a node value of the foregoing PkgURL-LAN. In addition, the device management server may further configure an operation node Operations and sub-nodes under Operations for the MO which is mapped by the at least one terminal and is in the gateway.

After the device management server configures the node in the MO which is mapped by the terminal and is in the gateway, the device management server may execute a download operation on the sub-node under Operations, for example, execute an /Operations/Download node. Since the foregoing nodes are located in the MO which is mapped by the terminal Device1 and is in the gateway, the gateway forwards the configuration of the nodes and the operation executed to Device1. Specifically, the device management server configures a corresponding SCOMO sub-tree, that is, a Download sub-tree, on Device1, and executes a Download node in the sub-tree. Since in this case, a value of the node is equal to the value of the foregoing PkgURL-LAN node, that is, a URL on the gateway, Device1 performs the download operation on the gateway according to the node value of the configured PkgURL.

In the device management method provided in this embodiment, in one aspect, Pkg URL addresses at the WAN side and at the LAN side are configured for the MO which is of the gateway and is in the management tree of the gateway; and in another aspect, an LAN side address pointing to the local gateway is configured in the MO which is mapped by the terminal and is in the gateway, which implements a function that the device management server performs software distribution through the gateway, that is, the gateway downloads software on the WAN side in place of the terminal, so that the terminal merely needs to download the software on the gateway and does not need to download the software from the corresponding server at the WAN side, thereby alleviating the burden of the server at the WAN side, and saving a network resource at the WAN side.

In the second embodiment of the device management method, the PkgURL at the LAN side, that is, the relevant identifier at the LAN side, is configured by the device management server. As another exemplary implementation manner, the relevant identifier at the LAN side may be further pre-designated by the gateway, that is, the device management server merely needs to configure a PkgURL at a WAN side in an MO of a gateway, after the configuration, the device management server triggers the gateway to perform download on a corresponding server at the WAN side according to a node value of the configured PkgURL-WAN, and after the completion of the download, the gateway may designate a local URL and store the software in the URL, where the URL may specifically be an IP address, port, and designated directory or address of the gateway. The gateway adds the URL as a node value to the PkgURL-LAN node.

Afterwards, the device management server may acquire the value of the PkgURL-LAN node from the gateway to configure an MO which is mapped by a terminal and is in the gateway. For example, the device management server configures an SCOMO mapped by a terminal Device1, and sets a ./Device1/1/Download/1/PkgURL node in the SCOMO, where a value of the node is equal to a node value which is of the PkgURL-LAN and is acquired by the device management server from the gateway. After the completion of the configuration, the device management server triggers the terminal to perform a download operation, that is, the device management server executes a sub-node under Operations, for example, executes an /Operations/Download node. Since the foregoing nodes are located in an MO which is mapped by Device1 and is in the gateway, the gateway forwards the configuration for the nodes and the operation executed to Device1. Specifically, the device management server configures a corresponding SCOMO sub-tree, that is, a Download sub-tree, on Device1, and executes a Download node in the sub-tree. Since a value of the node is equal to the value of the foregoing PkgURL-LAN node, that is, a URL on the gateway, Device1 performs the download operation on the gateway according to the node value of the configured PkgURL.

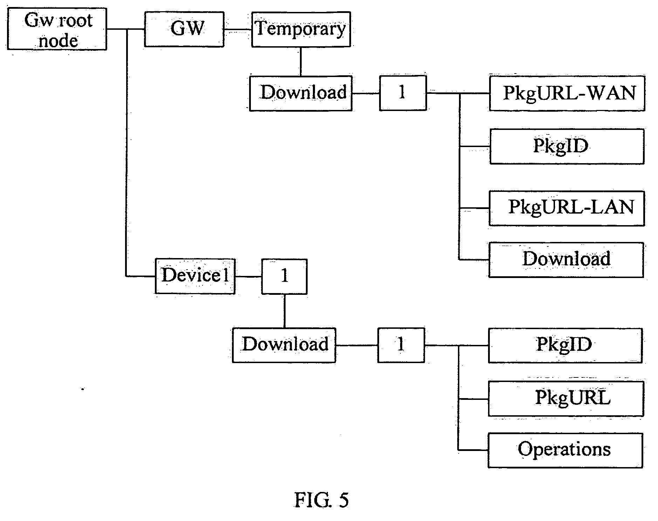

In the foregoing description, the device management server needs to add the PkgURL-LAN node in the MO in the management tree of the gateway, and the device management server configures a URL of the PkgURL-LAN, or the gateway pre-designates a local URL. As another feasible implementation manner, the device management server or the gateway may not add the node value to the PkgURL-LAN node, or may not generate the node. FIG. 5 is a schematic diagram of a third embodiment of the device management method according to the present invention. Reference is made to FIG. 5.

A device management server may create an MO in a management tree of a gateway, and configure a PkgURL of a software package at a WAN side (that is, a relevant identifier at the WAN side), and then the device management server may further configure a first data packet identifier (referring to the ./GW/Temporary/Download/1/PkgID node in FIG. 5) for information interaction between the gateway and the WAN side. The gateway may record correspondence between a pre-designated local URL and the first data packet identifier.

When configuring a ./Device1/1/Download/1 sub-tree in an MO which is mapped by the terminal and is in the gateway, the device management server configures a second data packet identifier (that is, a ./Device1/1/Download/1/PkgID node in FIG. 5) for information interaction between the terminal and the gateway, where the second data packet identifier is the same as the first data packet identifier. The gateway may add a designated URL to the PkgURL node under ./Device1/1/Download/1 as a node value according to the recorded correspondence between the local designated URL and the first data packet identifier. In this embodiment, the node value of ./Device1/1/Download/1/PkgURL may also be pre-designated by the gateway.

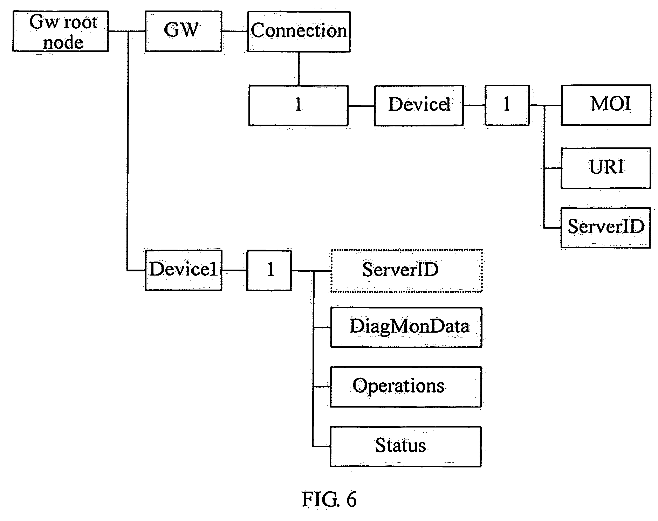

FIG. 6 is a schematic diagram of a fourth embodiment of a device management method according to the present invention. In this embodiment, a fault diagnosis scene is taken as an example for description.

Referring to FIG. 6, in one aspect, a device management server, that is, the DM Server, may create an MO in a device management tree of a gateway, and the device management server configures a relevant identifier of a WAN, that is, a DiagMon ServerID, for the created MO. A node value of .GW/Connection/1/ServerID shown in FIG. 6 may be an identifier or an address of a diagnostic monitoring server or a relevant server at the WAN side. The device management server may further configure an attribute identifier (an MOI and/or a URL) for the created MO, where the MOI is used to indicate that an attribute of the created MO is a diagnostic monitoring function management object, and the MOI may specifically be urn:oma:mo:oma-diag:paniclog:1.0.

In another aspect, the device management server configures a node in an MO which is mapped by a terminal and is in the gateway, for example, configures a DiagMon Function MO mapped by a terminal Device1, and sets a value of a ./Device1/1/ServerID node to be a relevant identifier at an LAN side, where the relevant identifier at the LAN side is an access identifier of the gateway at the LAN side, and the terminal may access the gateway according to the access identifier of the gateway at the LAN side. A Type attribute of ./Device1/1 is an MOI of Function MO, that is, urn:oma:mo:oma-diag:paniclog:1.0. In addition, the device management server may further configure another node in the DiagMon Function MO, for example, nodes such as DiagMonData, Operations and their sub-nodes, and Status.

After the foregoing configuration, the device management server executes a sub-node under Operations, for example, executes an /Operations/Start node. Since the node is located in an MO which is mapped by the terminal Device1 and is in the gateway, the gateway forwards the configuration of the nodes and the operation executed to Device1, specifically, sends the configuration and the operation to the corresponding DiagMon Function MO on Device1, and executes a Start node in it.

Afterwards, Device1 starts to perform diagnostic monitoring on itself. After collecting data, since a local identifier or address of the gateway is configured for a ServerID node in the MO which is mapped by Device1 and is in the gateway, Device1 initiates a session to the gateway, informs the gateway that data is collected, and sends the data to the gateway.

After receiving the data, the gateway stores the data in ./Device1/1/ DiagMonData in the MO mapped by the terminal Device 1, and then, the gateway searches ./GW/Connection/1/ according to a Type attribute value MOI of the ./Device1/1 node, that is, urn:oma:mo:oma-diag:paniclog:1.0, specifically, searches for whether a node value of the MOI in each sub-tree of ./GW/Connection/1/ is equal to the Type attribute value, and if it is found that the node value of the MOI in a ./GW/Connection/1/Device1/1 sub-tree is equal to the Type value, the gateway initiates a session to a diagnostic monitoring server or a relevant server designated by the node value of ./GW/Connection/1/Device1/1/ServerID, and sends the data stored in ./Device1/1/ DiagMonData.

It should be noted that, if searching according to the URL, after the gateway receives the data and stores the data in ./Device1/1/DiagMonData, the gateway searches for, in ./GW/Connection/1/Device1, whether a node value of the URL in each sub-tree of ./GW/Connection/1/Device1 is equal to ./Device1/1, initiates a session to a diagnostic monitoring server or a relevant server designated by the node value of ./GW/Connection/1/Device1/1/ServerID, and sends the data stored in ./Device1/1/ DiagMonData.

In the device management method provided in this embodiment, in one aspect, the device management server configures DiagMon ServerID (that is, a relevant identifier at the WAN side) and an MOI (management object identifier) and/or a URL (uniform resource locator) node (that is, a relevant identifier at the LAN side) for an MO which is of the gateway and is in the management tree of the gateway; and in another aspect, the device management server configures DiagMon Function MO which is mapped by a terminal and is in the gateway, so that the gateway collects diagnostic data from the terminal, finds an identifier or an address of a server at the WAN side, and sends the diagnostic data to the server at the WAN side (that is, information interaction between the terminal and the gateway, and information interaction between the gateway and the WAN side).

Persons of ordinary skill in the art should understand that all or part of the steps of the foregoing method embodiments may be implemented by a program instructing relevant hardware. The foregoing program may be stored in a computer readable storage medium. When the program runs, the program executes the steps of the foregoing method embodiments. The foregoing storage medium may be various media capable of storing program codes, including a ROM, a RAM, a magnetic disk or a compact disk.

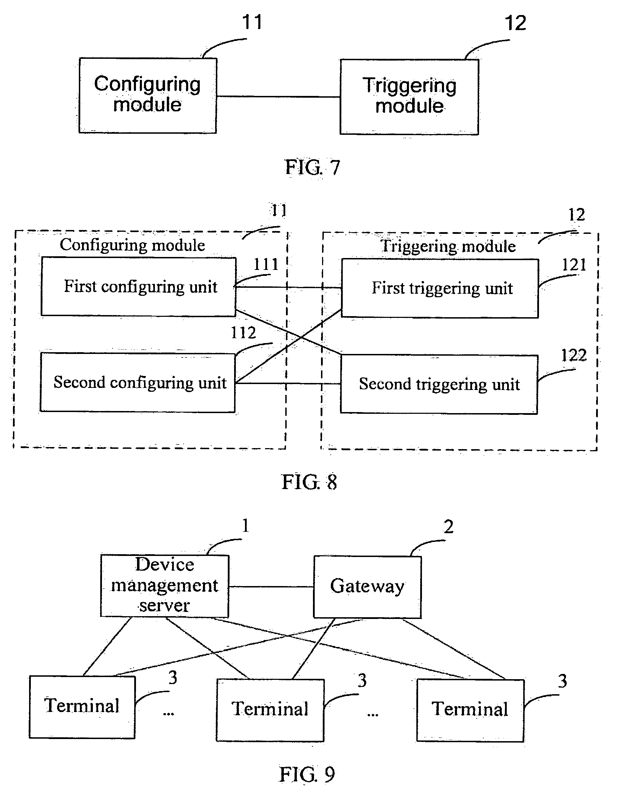

FIG. 7 is a schematic structural diagram of a first embodiment of a device management DM server according to the present invention. Referring to FIG. 7, the device management server includes a configuring module 11 and a triggering module 12.

The configuring module 11 is configured to configure a relevant identifier at a wide area network WAN side for a management object which is of a gateway and is in a management tree of the gateway, and configure a relevant identifier at a local area network LAN side for a management object which is mapped by at least one terminal and is in the management tree of the gateway, where the relevant identifier at the WAN side includes a uniform resource locator at the WAN side, a server identifier at the WAN side or a server address at the WAN side, and the relevant identifier at the LAN side includes a uniform resource locator at the LAN side, an access identifier of the gateway at the LAN side or an access address of the gateway at the LAN side.

The triggering module 12 is configured to trigger the at least one terminal to perform information interaction with the gateway according to the relevant identifier which is at the LAN side and is configured by the configuring module 11, and trigger the gateway to perform information interaction with a corresponding server at the WAN side according to the relevant identifier which is at the WAN side and is configured by the configuring module 11.

In the device management server provided in this embodiment, a relevant identifier at a WAN side is configured for an MO which is of a gateway and is in a management tree of the gateway, so that the gateway directly performs information interaction with a relevant server at the WAN side, and a relevant identifier which is at an LAN side and points to a certain location in the gateway is configured for an MO which is mapped by a terminal and is in the gateway, so that the terminal can perform information interaction with the gateway side and does not need to perform information interaction with the WAN side, thereby alleviating the burden of the server at the WAN side and saving a resource of a wide area network.

FIG. 8 is a schematic structural diagram of a second embodiment of a device management DM server according to the present invention. Referring to FIG. 8, based on the foregoing embodiment,
optionally, a triggering module 12 may further include a first triggering unit 121 and/or a second triggering unit 122.

The first triggering unit 121 is configured to, when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored in the gateway, trigger the gateway to perform a download operation on a corresponding server at the WAN side according to the uniform resource locator at the WAN side, and trigger the at least one terminal to perform a download operation on the gateway according to the uniform resource locator at the LAN side.

The second triggering unit 122 is configured to, when the relevant identifier at the WAN side is the server identifier at the WAN side or the server address at the WAN side, and the relevant identifier at the LAN side is the access identifier of the gateway at the LAN side or the access address of the gateway at the LAN side, trigger the at least one terminal to send data to the gateway according to the access identifier of the gateway at the LAN side or the access address of the gateway at the LAN side, and trigger the gateway to send data to the corresponding server at the WAN side according to the server identifier at the WAN side or the server address at the WAN side.

Optionally, the configuring module 11 may include a first configuring unit 111 and/or a second configuring unit 112.

The first configuring unit 111 is configured to configure a relevant identifier at the local area network LAN side for the management object which is mapped by the at least one terminal and is in the gateway.

The second configuring unit 112 is configured to acquire a relevant identifier which is at the LAN side and is pre-designated by the gateway, and configure the management object which is mapped by the at least one terminal and is in the gateway.

In the device management server provided in this embodiment, a relevant identifier at a WAN side is configured for an MO which is of a gateway and is in a management tree of the gateway, so that the gateway directly performs information interaction with a server at the WAN side, and a relevant identifier which is at an LAN side and points to a certain location in the gateway is configured in an MO which is mapped by a terminal and is in the gateway, where the identifier may be configured by the server, and may also be pre-designated by the gateway, so that the terminal can perform information interaction with the gateway side and does not need to perform information interaction with the WAN side, thereby alleviating the burden of the server at the WAN side and saving a resource of a wide area network.

The embodiments of the device management server provided in the present invention correspond to the embodiments of the device management method provided in the present invention, which show a functional device for implementing the device management method provided in the present invention. For details, reference may be made to the foregoing method embodiments, which is not repeatedly described here again.

FIG. 9 is a schematic structural diagram of a first embodiment of a device management system according to the present invention. Referring to FIG. 9, the system includes a device management server 1, a gateway 2 and at least one terminal 3.

The device management server 1 is configured to configure a relevant identifier at a wide area network WAN side for a management object which is of the gateway and is in a management tree of the gateway 2, and configure a relevant identifier at a local area network LAN side for a management object which is mapped by the at least one terminal 3 and is in the management tree of the gateway 2, where the relevant identifier at the WAN side includes a uniform resource locator at the WAN side, a server identifier at the WAN side or a server address at the WAN side, and the relevant identifier at the LAN side includes a uniform resource locator at the LAN side, an access identifier of the gateway 2 at the LAN side or an access address of the gateway 2 at the LAN side; and trigger the at least one terminal 3 to perform information interaction with the gateway 2 according to the relevant identifier at the LAN side, and trigger the gateway 2 to perform information interaction with a corresponding server at the WAN side according to the relevant identifier at the WAN side.

The at least one terminal 3 is configured to perform information interaction with the gateway 2 according to the relevant identifier at the LAN side.

The gateway 2 is configured to perform information interaction with the corresponding server at the WAN side according to the relevant identifier at the WAN side.

In the device management system provided in this embodiment, a device management server configures a relevant identifier at a WAN side for an MO which is of a gateway and is in a management tree of the gateway, so that the gateway directly performs information interaction with a server at the WAN side, and configures a relevant identifier which is at an LAN side and points to a certain location in the gateway for an MO which is mapped by a terminal and is in the gateway, where the relevant identifier at the LAN side may be configured by the device management server, and may also be pre-designated by the gateway, so that the terminal can perform information interaction with the gateway side and does not need to perform information interaction with the WAN side, thereby alleviating the burden of a server at the WAN side and saving a resource of a wide area network.

Finally, it should be noted that the foregoing embodiments are merely used for describing the technical solutions of the present invention, but not intended to limit the present invention. It should be understood by persons of ordinary skill in the art that although the present invention is described in detail with reference to the foregoing embodiments, modifications can still be made to the technical solutions recorded in each foregoing embodiment, or equivalent replacements can be made to some technical features in the technical solutions, as long as the modifications or replacements do not make the essence of corresponding technical solutions to depart from the scope of the technical solutions of each embodiment of the present invention. The method is applicable to information routing and forwarding by a routing node in various other wireless communication networks.

## Claims

1. A device management method, comprising:
Configuring (101) a relevant identifier at a wide area network WAN side for a management object which is for a gateway and is in a management tree of the gateway, and
Configuring a relevant identifier at a local area network LAN side for a management object which is mapped by at least one terminal and is in the management tree of the gateway, wherein the relevant identifier at the WAN side comprises a uniform resource locator at the WAN side, a server identifier at the WAN side, or a server address at the WAN side, and the relevant identifier at the LAN side comprises a uniform resource locator at the LAN side, an access identifier of the gateway at the LAN side, or an access address of the gateway at the LAN side; and
Triggering (102) the at least one terminal to perform information interaction with the gateway according to the relevant identifier at the LAN side, and
Triggering the gateway to perform information interaction with a corresponding server at the WAN side according to the relevant identifier at the WAN side;
when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway,
the triggering (102) the at least one terminal to perform information interaction with the gateway according to the relevant identifier at the LAN side, and triggering the gateway to perform information interaction with the corresponding server at the WAN side according to the relevant identifier at the WAN side comprises:
triggering the gateway to perform a download operation on the corresponding server at the WAN side according to the uniform resource locator at the WAN side; and
triggering the at least one terminal to perform a download operation on the gateway according to the uniform resource locator at the LAN side.

2. The method according to claim 1, wherein
when the relevant identifier at the WAN side is the server identifier at the WAN side or the server address at the WAN side, and the relevant identifier at the LAN side is the access identifier of the gateway at the LAN side or the access address of the gateway at the LAN side,
the triggering (102) the at least one terminal to perform information interaction with the gateway according to the relevant identifier at the LAN side, and triggering the gateway to perform information interaction with the corresponding server at the WAN side according to the relevant identifier at the WAN side comprises:
triggering the at least one terminal to send data to the gateway according to the access identifier of the gateway at the LAN side or the access address of the gateway at the LAN side; and
triggering the gateway to send data to the corresponding server at the WAN side according to the server identifier at the WAN side or the server address at the WAN side.

3. The method according to any one of claims 1 to 2, wherein the configuring the relevant identifier at the local area network LAN side for the management object which is mapped by the at least one terminal and is in the management tree of the gateway comprises:
configuring the relevant identifier at the LAN side for a management object which is mapped by the at least one terminal and is in the gateway;
or
acquiring a relevant identifier which is at the LAN side and is pre-designated by the gateway, and configuring a management object which is mapped by the at least one terminal and is in the gateway.

4. A device management DM server, comprising:
a configuring module (11), configured to configure a relevant identifier at a wide area network WAN side for a management object which is for a gateway and is in a management tree of the gateway, and configure a relevant identifier at a local area network LAN side for a management object which is mapped by at least one terminal and is in the management tree of the gateway, wherein the relevant identifier at the WAN side comprises a uniform resource locator at the WAN side, a server identifier at the WAN side, or a server address at the WAN side, and the relevant identifier at the LAN side comprises a uniform resource locator at the LAN side, an access identifier of the gateway at the LAN side, or an access address of the gateway at the LAN side; and
a triggering module (12), configured to trigger the at least one terminal to perform information interaction with the gateway according to the relevant identifier which is at the LAN side and is configured by the configuring module, and trigger the gateway to perform information interaction with a corresponding server at the WAN side according to the relevant identifier which is at the WAN side and is configured by the configuring module;
wherein the triggering module (12) comprises:
a first triggering unit (121), configured to, when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway, trigger the gateway to perform a download operation on the corresponding server at the WAN side according to the uniform resource locator at the WAN side, and trigger the at least one terminal to perform a download operation on the gateway according to the uniform resource locator at the LAN side.

5. The DM server according to claim 4, wherein the triggering module (12) comprises:
a second triggering unit (122), configured to, when the relevant identifier at the WAN side is the server identifier at the WAN side or the server address at the WAN side, and the relevant identifier at the LAN side is the access identifier of the gateway at the LAN side or the access address of the gateway at the LAN side, trigger the at least one terminal to send data to the gateway according to the access identifier of the gateway at the LAN side or the access address of the gateway at the LAN side, and trigger the gateway to send data to the corresponding server at the WAN side according to the server identifier at the WAN side or the server address at the WAN side.

6. The DM server according to any one of claims 4 to 5, wherein the configuring module (11) comprises:
a first configuring unit (111), configured to configure the relevant identifier at the LAN side for a management object which is mapped by the at least one terminal and is in the gateway.

7. The DM server according to any one of claims 4 to 5, wherein the configuring module (11) comprises:
a second configuring unit (112), configured to acquire a relevant identifier which is at the LAN side and is pre-designated by the gateway, and configure the management object which is mapped by the at least one terminal and is in the gateway.

8. A device management system, comprising a device management server (1), a gateway (2), and at least one terminal (3), wherein
the device management server (1) is configured to configure a relevant identifier at a wide area network WAN side for a management object which is for the gateway (2) and is in a management tree of the gateway (2), and configure a relevant identifier at a local area network LAN side for a management object which is mapped by the at least one terminal (3) and is in the management tree of the gateway (2), wherein the relevant identifier at the WAN side comprises a uniform resource locator at the WAN side, a server identifier at the WAN side, or a server address at the WAN side, and the relevant identifier at the LAN side comprises a uniform resource locator at the LAN side, an access identifier of the gateway (2) at the LAN side, or an access address of the gateway (2) at the LAN side; and the device management system is further configured to trigger the at least one terminal (3) to perform information interaction with the gateway (2) according to the relevant identifier at the LAN side, and trigger the gateway (2) to perform information interaction with a corresponding server at the WAN side according to the relevant identifier at the WAN side; when the relevant identifier at the WAN side is a uniform resource locator of a software package at the WAN side, the relevant identifier at the LAN side is a uniform resource locator of the software package at the LAN side, and the uniform resource locator at the LAN side points to an access path of downloaded data stored by the gateway,
the trigger the at least one terminal (3) to perform information interaction with the gateway (2) according to the relevant identifier at the LAN side, and trigger the gateway (2) to perform information interaction with the corresponding server at the WAN side according to the relevant identifier at the WAN side comprises:
trigger the gateway (2) to perform a download operation on the corresponding server at the WAN side according to the uniform resource locator at the WAN side; and
trigger the at least one terminal (3) to perform a download operation on the gateway (2) according to the uniform resource locator at the LAN side;
the at least one terminal (3) is configured to perform information interaction with the gateway (2) according to the relevant identifier at the LAN side; and
the gateway (2) is configured to perform information interaction with the corresponding server at the WAN side according to the relevant identifier at the WAN side.

## Patentansprüche

1. Gerätemanagementverfahren, das Folgendes umfasst:
Konfigurieren (101) einer relevanten Kennung auf einer Weitbereichsnetzwerk-Seite oder WAN-Seite für ein Managementobjekt, das für ein Gateway bestimmt ist und das sich in einem Managementbaum des Gateways befindet, und
Konfigurieren einer relevanten Kennung auf einer Lokalbereichsnetzwerk-Seite oder LAN-Seite für ein Managementobjekt, das von mindestens einem Endgerät abgebildet wird und sich in dem Managementbaum des Gateways befindet, wobei die relevante Kennung auf der WAN-Seite einen "Uniform Resource Locator" auf der WAN-Seite, eine Serverkennung auf der WAN-Seite oder eine Serveradresse auf der WAN-Seite umfasst und wobei die relevante Kennung auf der LAN-Seite einen "Uniform Resource Locator" auf der LAN-Seite, eine Zugangskennung des Gateways auf der LAN-Seite oder eine Zugangsadresse des Gateways auf der LAN-Seite umfasst; und
Triggern (102) des mindestens einen Endgeräts, um Informationsinteraktion mit dem Gateway gemäß der relevanten Kennung auf der LAN-Seite durchzuführen, und
Triggern des Gateways, um Informationsinteraktion mit einem entsprechenden Server auf der WAN-Seite gemäß der relevanten Kennung auf der WAN-Seite durchzuführen;
wenn die relevante Kennung auf der WAN-Seite ein "Uniform Resource Locator" eines Software-Pakets auf der WAN-Seite ist, die relevante Kennung auf der LAN-Seite ein "Uniform Resource Locator" des Software-Pakets auf der LAN-Seite ist und der "Uniform Resource Locator" auf der LAN-Seite auf einen Zugangspfad von heruntergeladenen Daten zeigt, die von dem Gateway gespeichert werden,
das Triggern (102) des mindestens einen Endgeräts, Informationsinteraktion mit dem Gateway gemäß der relevanten Kennung auf der LAN-Seite durchzuführen, und das Triggern des Gateways, Informationsinteraktion mit dem entsprechenden Server auf der WAN-Seite gemäß der relevanten Kennung auf der WAN-Seite durchzuführen, Folgendes umfassen:
Triggern des Gateways, um eine Herunterlade-Operation an dem entsprechenden Server auf der WAN-Seite gemäß dem "Uniform Resource Locator" auf der WAN-Seite durchzuführen; und
Triggern des mindestens einen Endgeräts, um eine Herunterlade-Operation an dem Gateway gemäß dem "Uniform Resource Locator" auf der LAN-Seite durchzuführen.

2. Verfahren nach Anspruch 1, wobei
wenn die relevante Kennung auf der WAN-Seite die Serverkennung auf der WAN-Seite oder die Serveradresse auf der WAN-Seite ist und die relevante Kennung auf der LAN-Seite die Zugangskennung des Gateways auf der LAN-Seite oder die Zugangsadresse des Gateways auf der LAN-Seite ist,
das Triggern (102) des mindestens einen Endgeräts, um Informationsinteraktion mit dem Gateway gemäß der relevanten Kennung auf der LAN-Seite durchzuführen, und das Triggern des Gateways, um Informationsinteraktion mit dem entsprechenden Server auf der WAN-Seite gemäß der relevanten Kennung auf der WAN-Seite durchzuführen, Folgendes umfassen:
Triggern des mindestens einen Endgeräts, Daten gemäß der Zugangskennung des Gateways auf der LAN-Seite oder der Zugangsadresse des Gateways auf der LAN-Seite an das Gateway zu senden; und
Triggern des Gateways, Daten gemäß der Serverkennung auf der WAN-Seite oder der Serveradresse auf der WAN-Seite an den entsprechenden Server auf der WAN-Seite zu senden.

3. Verfahren nach einem der Ansprüche 1 bis 2, wobei das Konfigurieren der relevanten Kennung auf der Lokalbereichsnetzwerk-Seite oder LAN-Seite für das Managementobjekt, das von dem mindestens einen Endgerät abgebildet wird und sich in dem Managementbaum des Gateways befindet, Folgendes umfasst:
Konfigurieren der relevanten Kennung auf der LAN-Seite für das Managementobjekt, das von dem mindestens einen Endgerät abgebildet wird und sich in dem Gateway befindet;
oder
Erfassen einer relevanten Kennung, die sich auf der LAN-Seite befindet und von dem Gateway vordesigniert ist, und Konfigurieren eines Managementobjekts, das von dem mindestens einen Endgerät abgebildet wird und sich in dem Gateway befindet.

4. Gerätemanagement-Server oder DM-Server, der Folgendes umfasst:
ein Konfigurationsmodul (11), das dafür ausgelegt ist, eine relevante Kennung auf einer Weitbereichsnetzwerk-Seite oder WAN-Seite für ein Managementobjekt, das für ein Gateway bestimmt ist und das sich in einem Managementbaum des Gateways befindet, zu konfigurieren, und eine relevante Kennung auf einer Lokalbereichsnetzwerk-Seite oder LAN-Seite für ein Managementobjekt, das von mindestens einem Endgerät abgebildet wird und sich in dem Managementbaum des Gateways befindet, zu konfigurieren, wobei die relevante Kennung auf der WAN-Seite einen "Uniform Resource Locator" auf der WAN-Seite, eine Serverkennung auf der WAN-Seite oder eine Serveradresse auf der WAN-Seite umfasst und wobei die relevante Kennung auf der LAN-Seite einen "Uniform Resource Locator" auf der LAN-Seite, eine Zugangskennung des Gateways auf der LAN-Seite oder eine Zugangsadresse des Gateways auf der LAN-Seite umfasst; und
ein Triggermodul (12), das dafür ausgelegt ist, das mindestens eine Endgerät zu triggern, um Informationsinteraktion mit dem Gateway gemäß der relevanten Kennung, die sich auf der LAN-Seite befindet und von dem Konfigurationsmodul konfiguriert ist, durchzuführen, und das Gateway zu triggern, um Informationsinteraktion mit einem entsprechenden Server auf der WAN-Seite gemäß der relevanten Kennung, die sich auf der WAN-Seite befindet und von dem Konfigurationsmodul konfiguriert ist, durchzuführen;
wobei das Triggermodul (12) Folgendes umfasst:
eine erste Triggereinheit (121), die dafür ausgelegt ist, wenn die relevante Kennung auf der WAN-Seite ein "Uniform Resource Locator" eines Software-Pakets auf der WAN-Seite ist, die relevante Kennung auf der LAN-Seite ein "Uniform Resource Locator" des Software-Pakets auf der LAN-Seite ist und der "Uniform Resource Locator" auf der LAN-Seite auf einen Zugangspfad von heruntergeladenen Daten zeigt, die von dem Gateway gespeichert werden, das Gateway zu triggern, eine Herunterlade-Operation an dem entsprechenden Server auf der WAN-Seite gemäß dem "Uniform Resource Locator" auf der WAN-Seite durchzuführen, und das mindestens eine Endgerät zu triggern, um eine Herunterlade-Operation an dem Gateway gemäß dem "Uniform Resource Locator" auf der LAN-Seite durchzuführen.

5. DM-Server nach Anspruch 4, wobei das Triggermodul (12), Folgendes umfasst:
eine zweite Triggereinheit (122), die dafür ausgelegt ist, wenn die relevante Kennung auf der WAN-Seite die Serverkennung auf der WAN-Seite oder die Serveradresse auf der WAN-Seite ist und die relevante Kennung auf der LAN-Seite die Zugangskennung des Gateways auf der LAN-Seite oder die Zugangsadresse des Gateways auf der LAN-Seite ist, das mindestens eine Endgerät zu triggern, Daten gemäß der Zugangskennung des Gateways auf der LAN-Seite oder der Zugangsadresse des Gateways auf der LAN-Seite an das Gateway zu senden; und das Gateway zu triggern, Daten gemäß der Serverkennung auf der WAN-Seite oder der Serveradresse auf der WAN-Seite an den entsprechenden Server auf der WAN-Seite zu senden.

6. DM-Server nach einem der Ansprüche 4 bis 5, wobei das Konfigurationsmodul (11) umfasst:
eine erste Konfigurationseinheit (111), die dafür ausgelegt ist, die relevante Kennung auf der LAN-Seite für ein Managementobjekt, das von dem mindestens einen Endgerät abgebildet wird und sich in dem Gateway befindet, zu konfigurieren.

7. DM-Server nach einem der Ansprüche 4 bis 5, wobei das Konfigurationsmodul (11) umfasst:
eine zweite Konfigurationseinheit (112), die dafür ausgelegt ist, eine relevante Kennung, die sich auf der LAN-Seite befindet und von dem Gateway vordesigniert ist, zu erfassen, und das Managementobjekt, das von dem mindestens einen Endgerät abgebildet wird und sich in dem Gateway befindet, zu konfigurieren.

8. Gerätemanagementsystem, das einen Gerätemanagementserver (1), ein Gateway (2) und mindestens ein Endgerät (3) umfasst, wobei
der Gerätemanagementserver (1) dafür ausgelegt ist, eine relevante Kennung auf einer Weitbereichsnetzwerk-Seite oder WAN-Seite für ein Managementobjekt, das für ein Gateway (2) bestimmt ist und das sich in einem Managementbaum des Gateways (2) befindet, zu konfigurieren, und eine relevante Kennung auf einer Lokalbereichsnetzwerk-Seite oder LAN-Seite für ein Managementobjekt, das von dem mindestens einen Endgerät (3) abgebildet wird und sich in dem Managementbaum des Gateways (2) befindet, zu konfigurieren, wobei die relevante Kennung auf der WAN-Seite einen "Uniform Resource Locator" auf der WAN-Seite, eine Serverkennung auf der WAN-Seite oder eine Serveradresse auf der WAN-Seite umfasst und wobei die relevante Kennung auf der LAN-Seite einen "Uniform Resource Locator" auf der LAN-Seite, eine Zugangskennung des Gateways (2) auf der LAN-Seite oder eine Zugangsadresse des Gateways (2) auf der LAN-Seite umfasst; und das Gerätemanagementsystem ferner dafür ausgelegt ist, das mindestens eine Endgerät (3) zu triggern, Informationsinteraktion mit dem Gateway (2) gemäß der relevanten Kennung auf der LAN-Seite durchzuführen, und das Gateway (2) zu triggern, Informationsinteraktion mit einem entsprechenden Server auf der WAN-Seite gemäß der relevanten Kennung auf der WAN-Seite durchzuführen; wenn die relevante Kennung auf der WAN-Seite ein "Uniform Resource Locator" eines Software-Pakets auf der WAN-Seite ist, die relevante Kennung auf der LAN-Seite ein "Uniform Resource Locator" des Software-Pakets auf der LAN-Seite ist und der "Uniform Resource Locator" auf der LAN-Seite auf einen Zugangspfad von heruntergeladenen Daten zeigt, die von dem Gateway gespeichert werden,
das Triggern des mindestens einen Endgeräts (3), um Informationsinteraktion mit dem Gateway (2) gemäß der relevanten Kennung auf der LAN-Seite durchzuführen, und das Triggern des Gateways (2), um Informationsinteraktion mit dem entsprechenden Server auf der WAN-Seite gemäß der relevanten Kennung auf der WAN-Seite durchzuführen, Folgendes umfassen:
Triggern des Gateways (2), eine Herunterlade-Operation an dem entsprechenden Server auf der WAN-Seite gemäß dem "Uniform Resource Locator" auf der WAN-Seite durchzuführen; und
Triggern des mindestens einen Endgeräts (3), eine Herunterlade-Operation an dem Gateway (2) gemäß dem "Uniform Resource Locator" auf der LAN-Seite durchzuführen;
wobei das mindestens eine Endgerät (3) dafür ausgelegt ist, Informationsinteraktion mit dem Gateway (2) gemäß der relevanten Kennung auf der LAN-Seite durchzuführen; und
das Gateway (2) dafür ausgelegt ist, Informationsinteraktion mit dem entsprechenden Server auf der WAN-Seite gemäß der relevanten Kennung auf der WAN-Seite durchzuführen.

## Revendications

1. Procédé de gestion de dispositifs, comprenant :
la configuration (101) d'un identificateur pertinent au niveau d'un réseau longue distance WAN pour un objet de gestion qui est destiné à une passerelle et qui se trouve dans l'arborescence de gestion de la passerelle, et
la configuration d'un identificateur pertinent au niveau d'un réseau local LAN pour un objet de gestion qui est mappé par au moins un terminal et qui se trouve dans l'arborescence de gestion de la passerelle, l'identificateur pertinent au niveau du réseau WAN comprenant une adresse uniforme de ressource au niveau du réseau WAN, un identificateur de serveur au niveau du réseau WAN ou une adresse de serveur au niveau du réseau WAN, et l'identificateur pertinent au niveau du réseau LAN comprenant une adresse uniforme de ressource au niveau du réseau LAN, un identificateur d'accès de la passerelle au niveau du réseau LAN ou une adresse d'accès de la passerelle au niveau du réseau LAN, et
le déclenchement (102) du ou des terminaux pour qu'ils exécutent une interaction d'informations avec la passerelle en fonction de l'identificateur pertinent au niveau du réseau LAN, et
le déclenchement de la passerelle pour qu'elle exécute une interaction d'informations avec un serveur correspondant au niveau du réseau WAN en fonction de l'identificateur pertinent au niveau du réseau WAN,
et lorsque l'identificateur pertinent au niveau du réseau WAN est une adresse uniforme de ressource pour un ensemble logiciel au niveau du réseau WAN, l'identificateur pertinent au niveau du réseau LAN est une adresse uniforme de ressource de l'ensemble logiciel au niveau du réseau LAN, et l'adresse uniforme de ressource du réseau LAN pointe vers un trajet d'accès de données téléchargées, stockées par la passerelle,
le déclenchement (102) du ou des terminaux pour qu'ils exécutent une interaction d'informations avec la passerelle en fonction de l'identificateur pertinent du réseau LAN, et le déclenchement de la passerelle pour qu'elle exécute une interaction d'informations avec le serveur correspondant au niveau du réseau WAN en fonction de l'identificateur pertinent au niveau du réseau WAN comprend :
le déclenchement de la passerelle pour qu'elle effectue une opération de téléchargement sur le serveur correspondant au niveau du réseau WAN en fonction de l'adresse uniforme de ressource du réseau WAN, et
le déclenchement du ou des terminaux pour qu'ils effectuent une opération de téléchargement sur la passerelle en fonction de l'adresse uniforme de ressource au niveau du réseau LAN.

2. Procédé selon la revendication 1, dans lequel
lorsque l'identificateur pertinent au niveau du réseau WAN représente l'identificateur de serveur au niveau du réseau WAN ou l'adresse de serveur au niveau du réseau WAN, et que l'identificateur pertinent au niveau du réseau LAN représente l'identificateur d'accès de la passerelle au niveau du réseau LAN ou bien l'adresse d'accès de la passerelle au niveau du réseau LAN,
le déclenchement (102) du ou des terminaux pour qu'ils exécutent une interaction d'informations avec la passerelle en fonction de l'identificateur pertinent au niveau du réseau LAN, et le déclenchement de la passerelle pour qu'elle exécute une interaction d'informations avec le serveur correspondant au niveau du réseau WAN en fonction de l'identificateur pertinent au niveau du réseau WAN, comprend :
le déclenchement du ou des terminaux pour qu'ils envoient des données à la passerelle en fonction de l'identificateur d'accès de la passerelle au niveau du réseau LAN ou de l'adresse d'accès de la passerelle au niveau du réseau LAN, et
le déclenchement de la passerelle pour qu'elle envoie des données vers le serveur correspondant au niveau du réseau WAN en fonction de l'identificateur de serveur au niveau du réseau WAN ou de l'adresse du serveur au niveau du réseau WAN.

3. Procédé selon l'une quelconque des revendications 1 et 2, dans lequel la configuration de l'identificateur pertinent au niveau du réseau local LAN pour l'objet de gestion qui est mappé par le ou les terminaux et qui se trouve dans l'arborescence de gestion de la passerelle comprend :
la configuration de l'identificateur pertinent au niveau du réseau LAN pour un objet de gestion qui est mappé par le ou les terminaux et qui se trouve dans la passerelle,
ou
l'acquisition de l'identificateur pertinent qui se trouve au niveau du réseau LAN et qui est désigné à l'avance par la passerelle, et la configuration d'un objet de gestion qui est mappé par le ou les terminaux et qui se trouve dans la passerelle.

4. Serveur de gestion de dispositifs DM, comprenant :
un module de configuration (11), programmé pour configurer un identificateur pertinent au niveau d'un réseau longue distance WAN pour un objet de gestion qui est destiné à une passerelle et qui se trouve dans l'arborescence de gestion de la passerelle, et pour configurer un identificateur pertinent au niveau d'un réseau local LAN pour un objet de gestion qui est mappé par le ou les terminaux et qui se trouve dans l'arborescence de gestion de la passerelle, dans lequel l'identificateur pertinent au niveau du réseau WAN comprend une adresse uniforme de ressource au niveau du réseau WAN, un identificateur de serveur au niveau du réseau WAN ou une adresse de serveur au niveau du réseau WAN, et l'identificateur pertinent au niveau du réseau LAN comprend une adresse uniforme de ressource au niveau du réseau LAN, un identificateur d'accès de la passerelle au niveau du réseau LAN ou une adresse d'accès de la passerelle au niveau du réseau LAN, et
un module de déclenchement (12), configuré pour déclencher le ou les terminaux pour qu'ils exécutent une interaction d'informations avec la passerelle en fonction de l'identificateur pertinent qui se trouve au niveau du réseau LAN et qui est configuré par le module de configuration, et pour déclencher la passerelle pour qu'elle exécute une interaction d'informations avec un serveur correspondant au niveau du réseau WAN en fonction de l'identificateur pertinent qui se trouve au niveau du réseau WAN et qui est configuré par le module de configuration,
dans lequel le module de déclenchement (12) comprend :
une première unité de déclenchement (121) configurée pour déclencher la passerelle, lorsque l'identificateur pertinent au niveau du réseau WAN est une adresse uniforme de ressource d'un ensemble logiciel au niveau du réseau WAN, que l'identificateur pertinent au niveau du réseau LAN est une adresse uniforme de ressource de l'ensemble logiciel au niveau du réseau LAN et que l'adresse uniforme de ressource au niveau du réseau LAN pointe vers un trajet d'accès de données téléchargées, stockées par la passerelle, pour qu'elle effectue une opération de téléchargement sur le serveur correspondant au niveau du réseau WAN en fonction de l'adresse uniforme de ressource au niveau du réseau WAN, et pour déclencher le ou les terminaux pour qu'ils effectuent une opération de téléchargement sur la passerelle en fonction de l'adresse uniforme de ressource au niveau du réseau LAN.

5. Serveur de gestion DM selon la revendication 4, dans lequel le module de déclenchement (12) comprend :
une seconde unité de déclenchement (122) configurée pour déclencher le ou les terminaux, lorsque l'identificateur pertinent au niveau du réseau WAN est l'identificateur de serveur au niveau du réseau WAN ou l'adresse de serveur au niveau du réseau WAN, et que l'identificateur pertinent au niveau du réseau LAN est l'identificateur d'accès de la passerelle au niveau du réseau LAN ou l'adresse d'accès de la passerelle au niveau du réseau LAN, pour qu'ils envoient des données vers la passerelle en fonction de l'identificateur d'accès de la passerelle au niveau du réseau LAN ou de l'adresse d'accès de la passerelle au niveau du réseau LAN, et pour déclencher la passerelle pour qu'elle envoie des données vers le serveur correspondant au niveau du réseau WAN en fonction de l'identificateur de serveur au niveau du réseau WAN ou de l'adresse de serveur au niveau du réseau WAN.

6. Serveur de gestion DM selon l'une quelconque des revendications 4 et 5, dans lequel le module de configuration (11) comprend :
une première unité de configuration (111) programmée pour configurer l'identificateur pertinent au niveau du réseau LAN pour un objet de gestion qui est mappé par le ou les terminaux et qui se trouve dans la passerelle.

7. Serveur de gestion DM selon l'une quelconque des revendications 4 et 5, dans lequel le module de configuration (11) comprend :
une seconde unité de configuration (112) programmée pour acquérir un identificateur pertinent qui se trouve au niveau du réseau LAN et qui est désigné à l'avance par la passerelle, et pour configurer l'objet de gestion qui est mappé par le ou les terminaux et qui se trouve dans la passerelle.

8. Système de gestion de dispositifs, comprenant un serveur de gestion de dispositifs (1), une passerelle (2) et au moins un terminal (3), dans lequel
le serveur de gestion de dispositifs (1) est conçu pour configurer un identificateur pertinent au niveau d'un réseau longue distance WAN pour un objet de gestion qui est destiné à la passerelle (2) et qui se trouve dans l'arborescence de gestion de la passerelle (2), et pour configurer un identificateur pertinent au niveau d'un réseau local LAN pour un objet de gestion qui est mappé par le ou les terminaux (3) et qui se trouve dans l'arborescence de gestion de la passerelle (2), l'identificateur pertinent au niveau du réseau WAN comprenant une adresse uniforme de ressource au niveau du réseau WAN, un identificateur de serveur au niveau du réseau WAN ou une adresse de serveur au niveau du réseau WAN, et l'identificateur pertinent au niveau du réseau LAN comprenant une adresse uniforme de ressource au niveau du réseau LAN un identificateur d'accès de la passerelle (2) au niveau du réseau LAN ou une adresse d'accès de la passerelle (2) au niveau du réseau LAN, et le système de gestion de dispositifs étant en outre configuré pour déclencher le ou les terminaux (3) pour qu'ils exécutent une interaction d'informations avec la passerelle (2) en fonction de l'identificateur pertinent au niveau du réseau LAN, et pour déclencher la passerelle (2) pour qu'elle exécute une interaction d'informations avec un serveur correspondant au niveau du réseau WAN en fonction de l'identificateur pertinent au niveau du réseau WAN, lorsque l'identificateur pertinent au niveau du réseau WAN est une adresse uniforme de ressource appartenant à un ensemble logiciel au niveau du réseau WAN, l'identificateur pertinent au niveau du réseau LAN est une adresse uniforme de ressource appartenant à l'ensemble logiciel au niveau du réseau LAN, et l'adresse uniforme de ressource au niveau du réseau LAN pointe vers un trajet d'accès de données téléchargées, stockées par la passerelle,
le déclenchement du ou des terminaux (3) pour qu'ils exécutent une interaction d'informations avec la passerelle (2) en fonction de l'identificateur pertinent au niveau du réseau LAN, et le déclenchement de la passerelle (2) pour qu'elle exécute une interaction d'informations avec le serveur correspondant au niveau du réseau WAN en fonction de l'identificateur pertinent au niveau du réseau WAN comprend :
le déclenchement de la passerelle (2) pour qu'elle effectue une opération de téléchargement sur le serveur correspondant au niveau du réseau WAN en fonction de l'adresse uniforme de ressource au niveau du réseau WAN, et
le déclenchement du ou des terminaux (3) pour qu'ils effectuent une opération de téléchargement sur la passerelle (2) en fonction de l'adresse uniforme de ressource au niveau du réseau LAN,
le ou les terminaux (3) étant configurés pour exécuter une interaction d'informations avec la passerelle (2) en fonction de l'identificateur pertinent au niveau du réseau LAN, et
la passerelle (2) étant configurée pour exécuter une interaction d'informations avec le serveur correspondant au niveau du réseau WAN en fonction de l'identificateur pertinent au niveau du réseau WAN.
